# EUROPEAN PATENT SPECIFICATION

(11) **EP 2 381 147 B1**
(45) Date of publication and mention of the grant of the patent: **23.01.2013**
(21) Application number: 11163589.2
(22) Date of filing: 22.04.2011
(51) Int. Cl.: F16K 27/00

(54) **Valved assembly for metering plants of liquid products such as chemicals and auxiliary substances for treating and dyeing fabrics and the like**
Ventilanordnung für Anlagen zur Messung von Flüssigprodukten wie Chemikalien und Hilfsstoffen zur Behandlung und Färbung von Stoffen und dergleichen
Ensemble de vanne pour mesurer les installations de produits liquides tels que des produits chimiques et substances auxiliaires permettant de traiter et de colorer les tissus et similaire

(30) Priority: 23.04.2010 IT TO20100345
(43) Date of publication of application: 26.10.2011
(73) Proprietor: LAWER S.p.A., 13836 Cossato (IT)
(72) Inventor: De Bona, Paolo, 13853, Lessona (BI) (IT); Graziola, Ermanno, 13853, Lessona (BI) (IT)
(74) Representative: Buzzi, Franco

(56) References cited:
- EP-A2- 0 429 411
- EP-A2- 1 859 872
- DE-A1- 10 062 792

## Description

### Field of the invention

The present invention relates in general to plants for metering liquid products such as chemicals and auxiliary substances, colouring agents, and the like in sectors such as the chemical, pharmaceutical, and cosmetic sectors and the like, and more in particular in the textile field, with express reference to colouring agents for dyeing fabrics.

### State of the art

The metering plants to which the invention refers typically comprise a set of storage units for the different liquid products to be metered, and a distribution line for feeding the liquids individually, metered via volumetric or gravimetric meters, to the equipment for use. Set between the storage unit and the distribution line are one or more valve assemblies, each comprising a tubular manifold equipped with a plurality of inlets connected to the various storage units and with a corresponding plurality of shutoff valves automatically controlled for alternatively opening and closing the communication between a respective inlet and the manifold. The shutoff valves are governed automatically by an electronic control unit that can be programmed with dedicated software and is operatively connected to the volumetric or gravimetric meter for the liquid substances each time fed from the manifold to the distribution line.

In a first solution currently in use the shutoff valves of the manifold consist of three-way ball valves the valve bodies of which are normally arranged according to an opposed horizontal configuration, in a staggered condition with respect to one another. The ball open/close element of each valve has a T-shaped channel and can be turned through 90° between a closed position, in which the passage between the respective inlet and the manifold is closed, and an open position, in which said passage is open to enable inlet of the liquid to which the valve is associated within the manifold, at the same time closing the branch thereof set upstream of the valve. Once the required amount of liquid has been metered, the ball of the valve sets itself back in the closed position, closing inlet of the product and restoring the continuity of the manifold. The transfer is then completed by feeding water through the manifold.

This solution is complex from a constructional standpoint and hence relatively costly.

In another known solution, which is constructionally simpler, two-way shutoff valves of the on/off type are used arranged in a vertically aligned configuration on top of the manifold. This solution proves, given the same performance, less expensive than the one with three-way ball valves, chiefly in so far as the two-way valves are simpler and easier to adapt to the manifold. On the other hand, this arrangement not only presents a considerable encumbrance, but also the drawback regarding the fact that the structure for fixing the bodies of the valves on the manifold entails, between the latter and the seats of the corresponding open/close elements, relatively deep cavities, within which small amounts of products can stagnate, the removal of which, by flushing of the manifold, is relatively problematical.

DE-A-10062792 is disclosing a multi-way valve (namely a two- or three-way valve) used in a different field, namely for storing gases, and is facing the problem of preventing contamination of the valve material by corrosive gases, specifically gases used in the manufacture of semiconductor devices. The proposed solution of that problem consists of providing the multi-way valve with a plastic body.

### Summary of the invention

The object of the present invention is to provide a new and original configuration of manifold of the valved assembly defined above that will enable the aforementioned drawbacks of the known solutions to be overcome.

According to the invention, said object is achieved by a valved assembly of the type set forth in claim 1.

Thanks to this arrangement, as compared to the prior art, a series of advantages summarized hereinafter are obtained:
- the opposed V configuration of the valves of the manifold enables in practice the length to be reduced by half, thus reducing the horizontal encumbrance and also the head losses of the manifold, taking into account the fact that normally it is connected to the intake side of the pump for delivery to the distribution line;
- the use of modules formed in a single piece with the stubs of the bodies of the opposed valves and with the corresponding inlet connectors enables reduction in the number of the connections along the main channel of flow of the manifold and elimination of mechanical connections between said stubs of the valve bodies and the manifold;
- the integration between valve bodies and manifold enables considerable reduction in the width of the cavities underlying the valve seats, the volume of which is even smaller than in the case of the known solutions with three-way ball valves, with considerable advantages in terms of ease of cleaning of the manifold;
- the inverted-V arrangement of the inlet connectors facilitates connection thereof with the piping connected to the storage units of the corresponding liquid products.

### Brief description of the drawings

The invention will now be described in detail with reference to the annexed drawings, which are provided purely by way of non-limiting example and in which:

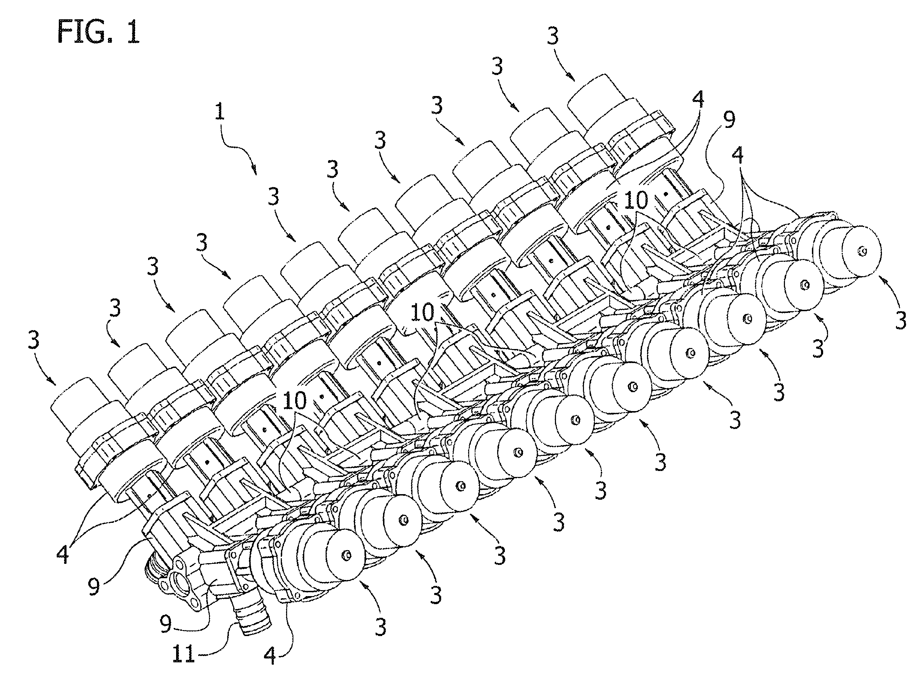

- Figure 1 is a schematic perspective view of a valved assembly that constitutes one embodiment of the invention;

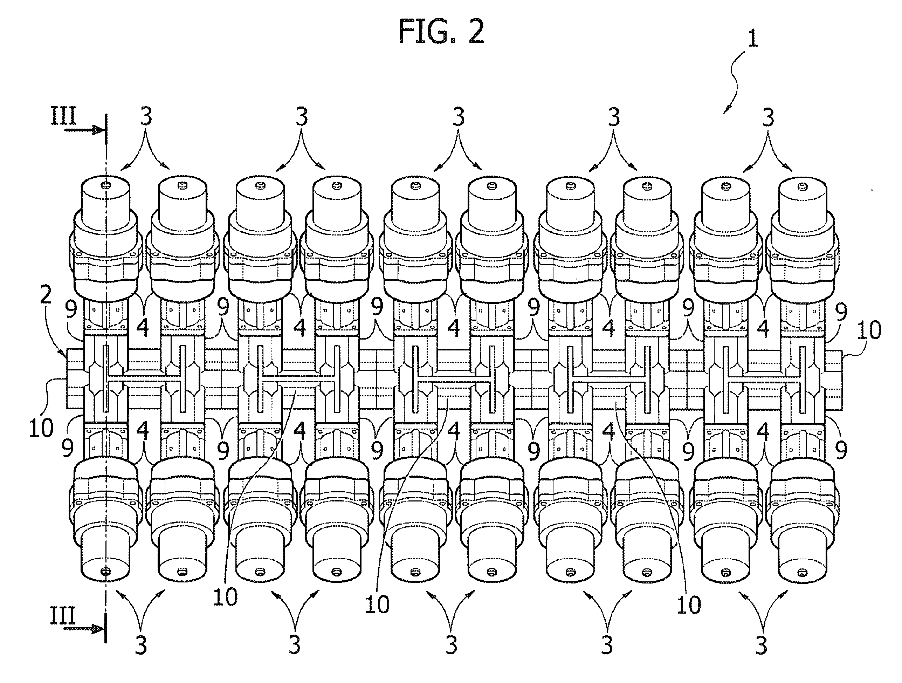

- Figure 2 is a top plan view of the valved assembly Figure 1;
- Figure 3 is a cross-sectional view at a larger scale according to the line III-III of Figure 2;
- Figure 4 is a partially sectioned perspective view of a detail of the valved assembly; and
- Figure 5 is a partially sectioned perspective view of one of the modules that make up the valved assembly according to the invention.

### Detailed description of the invention

The figures represent an example of embodiment of a valved assembly according to the invention designed for a plant for metering liquid products for treating and dyeing fabrics. It should be noted that the valved assembly can advantageously be applied also to plants for metering different liquid products, for example in the chemical and cosmetic sectors, in the sector of paints, etc.

The valved assembly, designated as a whole by the reference number 1, is prearranged in a way in itself known for being connected at inlet to a plurality of storage units for the liquid products that are to be fed individually to a line for distribution to the equipment for use, normally via a volumetric pump connected to the outlet of the valved assembly. Operatively associated to the distribution line is a measuring device, typically constituted by a flowmeter of a conventional type, which is in turn connected to an electronic processing and control unit that governs operation of the valved assembly 1.

In general terms, the valved assembly 1 consists of a common tubular manifold 2 and a plurality of shutoff valves 3, each of which controls passage of a respective liquid product, coming from the corresponding storage container, to the manifold 2.

According to the peculiar aspect of the invention, the valves 3, each of which is controlled automatically with conventional modalities by the control unit of the metering plant, are arranged in opposed pairs according to a V configuration so as to project obliquely upwards with respect to the manifold 2.

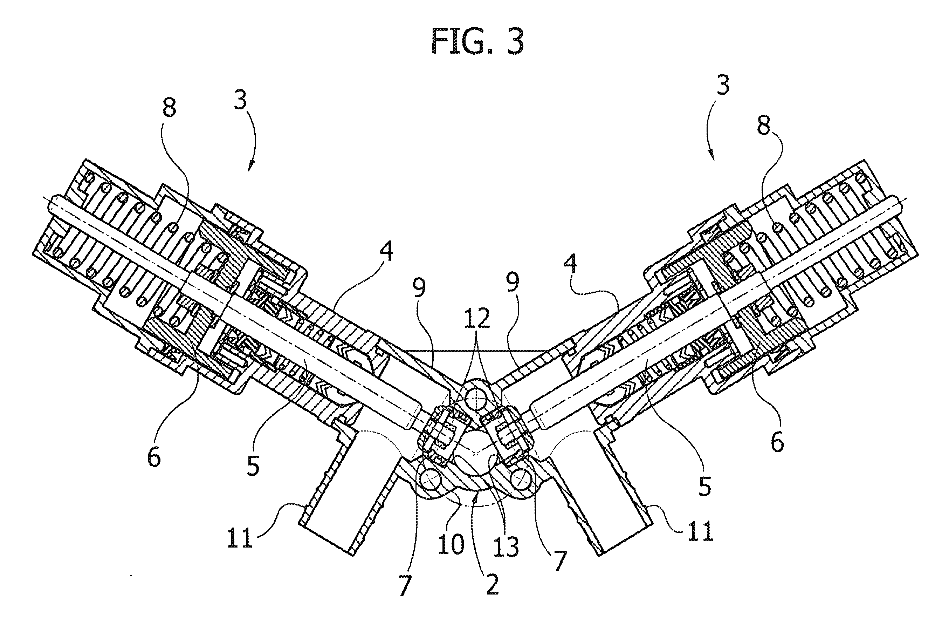

As is illustrated more clearly in Figure 3, each valve 3 comprises a valve body 4 including a fluid actuator formed by a stem 5 coupled to a piston 6 and bearing at its inner end an open/close element 7. The open/close element 7 can be displaced, via a pressurized fluid acting on one side of the piston 6 and against the action of a thrust spring 8 acting on the opposite side of the piston 6, from the closed position represented in Figure 3 to an open position.

Each valve body 4 is fixed at the base to a respective stub 9 of a valve body formed in a single piece, for example by means of moulding of plastic material, with a corresponding axial section 10 of the manifold 2 and with a respective inlet connector 11 oriented perpendicular to the valve body 4. Consequently, and as is evident from Figure 3, the inlet connectors 11 of each pair of opposed valves 3 are also arranged according to a V configuration, but set upside down, thus projecting at the bottom underneath the manifold 2. Each inlet connector 11 is to be connected to the storage container for a respective liquid.

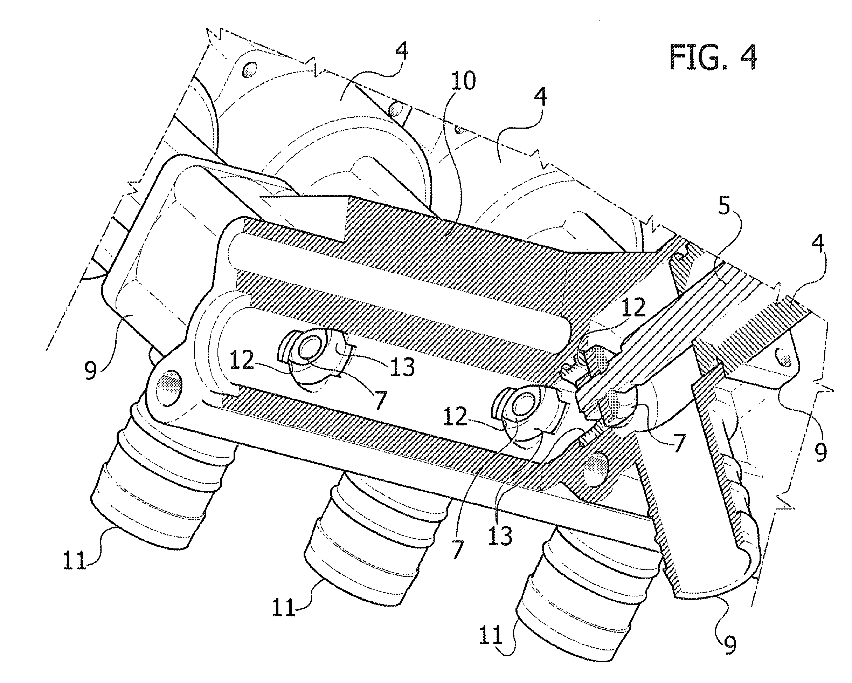

The open/close elements 7 of each pair of valves 3 co-operate with respective valve seats 12 formed between the corresponding stubs 9 and the manifold 2, in a position immediately facing the latter. In this way, as is illustrated in detail in Figure 4, between each open/close element 7 and the section 10 of the manifold 2 there remains a cavity 13 of considerably limited width.

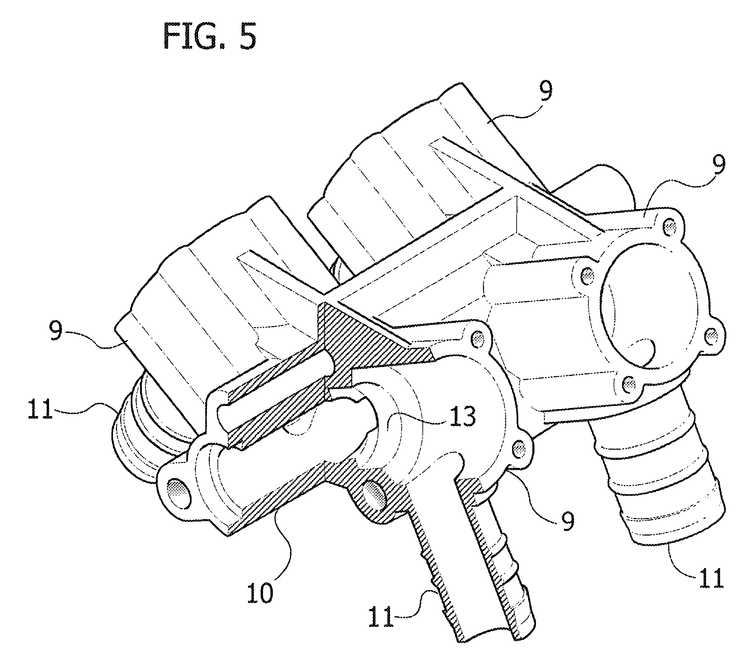

In the preferred embodiment described herein, the axial sections 10 that make up the manifold 2 form an enbloc assembly with two pairs of stubs 9 and corresponding inlet connectors 11, in the way represented in Figure 5, in such a way that the valved assembly 1 is in practice constituted by a series of contiguous modules axially joined together, each of which hence includes two pairs of opposed valves 3 in a V arrangement. It should, however, be noted that each of said modules could include a single pair of valves 3, or else a number of pairs.

With the arrangement described above a series of advantages summed up hereinafter is obtained:
- the arrangement in a V configuration of the valves 3 enables the length of the manifold 2, and hence of the valved assembly 1 as a whole, to be reduced by half, thus reducing the overall dimensions and the head losses;
- said V arrangement also enables reduction of the vertical encumbrance of the valved assembly 1 as compared to the known solutions with valves arranged vertically, and the inverted-V configuration of the inlet connectors 11 moreover facilitates the connection thereof to the piping for connection to the storage units for the liquids;
- the use of the modules with opposed pairs of valves 3 enables reduction of the number of the connections between the sections 10 of the manifold 2, and the formation of the stubs 9 of the valve bodies 4 in a single piece with said sections 10 facilitates installation of the fluid actuators (stem 5 and piston 6) that govern opening of the valves 3;
- the reduction of the depth of the cavities 13 formed between the open/close elements 12 of the valves 3 and the manifold 2 renders more convenient and effective periodic flushing of the manifold 2 itself for removing possible products stagnating therein.

Of course, the details of construction and the embodiments may vary widely with respect to what has been described and illustrated herein, without thereby departing from the scope of the present invention as defined in the ensuing claims.

Likewise, the orientation of the valved assembly is not binding in so far as the manifold 2 can be positioned in a direction different from the horizontal one illustrated in the drawings.

## Claims

1. A valved assembly (1) intended for use in a plant for metering liquid products such as chemicals and auxiliary substances for treating and dyeing fabrics and the like that are to be fed individually from storage units to a line for metered distribution of said liquid products to equipment for use thereof, said valved assembly comprising a tubular manifold (2) equipped with a plurality of inlets (11) to be connected to said storage units and with a plurality of respective shutoff valves (3) controlled automatically for alternatively opening and closing the communication between each inlet (11) and the manifold (2),
the shutoff valves (3) of the manifold (2) including a plurality of opposed pairs arranged according to V configuration, with the respective bodies each including two axial portions (4, 9) of which one portion (9) is integrated in a single piece with the manifold (2), said valved assembly being **characterized in that**:
- the manifold (2) is formed by a series of contiguous modules joined together axially, each of which includes in a single piece an axial section (10) of the manifold (2), said one axial portions (9) of the valve bodies (4) of at least one pair of valves (3), and the corresponding inlets (11),
- said inlets consist of tubular connectors (11) arranged according to an inverted-V configuration,
- said one axial portions (9) of the valve bodies (4) form respective valve seats (12) immediately facing the corresponding axial section (10) of the manifold (2).

2. The valved assembly according to Claim 1, **characterized in that** each module includes in a single piece two pairs of said one axial portions (9) of valve bodies (4) and two corresponding pairs of tubular inlet connectors (11).

## Patentansprüche

1. Mit Ventilen versehene Anordnung (1), die zum Einsatz in einer Anlage zum Dosieren flüssiger Erzeugnisse, wie beispielsweise Chemikalien und Hilfssubstanzen zum Behandeln und Färben von Stoffen und dergleichen, bestimmt ist, die einzeln aus Vorratseinheiten einer Leitung zum dosierten Verteilen der flüssigen Erzeugnisse an Einrichtungen zur Verwendung derselben zugeführt werden sollen, wobei die mit Ventilen versehene Anordnung einen röhrenförmigen Verteiler (2) umfasst, der mit einer Vielzahl von Einlassen (11), die mit den Vorratseinheiten zu verbinden sind, sowie mit einer Vielzahl entsprechender Sperrventile (3) versehen ist, die automatisch gesteuert werden, um die Verbindung zwischen jedem Einlass (11) und dem Verteiler (2) abwechseln zu öffnen und zu schließen, wobei die Sperrventile (3) des Verteilers (2) eine Vielzahl einander gegenüberliegender Paare einschließen, die in V-Form angeordnet sind, und die entsprechenden Gehäuse jeweils zwei axiale Abschnitte (4, 9) enthalten, von denen ein Abschnitt (9) in einem Stück mit dem Verteiler (2) ausgebildet ist, und die mit Ventilen versehene Anordnung **dadurch gekennzeichnet ist, dass**:
der Verteiler (2) durch eine Reihe fortlaufender Module gebildet wird, die axial miteinander verbunden sind und die jeweils in einem Stück einen axialen Abschnitt (10) des Verteilers (2), die einen axialen Abschnitte (9) der Ventilgehäuse (4) wenigstens eines Paars von Ventilen (3) sowie die entsprechenden Einlasse (11) enthalten,
die Einlasse aus röhrenförmigen Verbindern (11) bestehen, die umgekehrt V-förmig angeordnet sind,
die einen axialen Abschnitte (9) der Ventilgehäuse (4) jeweilige Ventilsitze (12) aufweisen, die dem entsprechenden axialen Abschnitt (10) des Verteilers (2) direkt zugewandt sind.

2. Mit Ventilen versehene Anordnung nach Anspruch 1, **dadurch gekennzeichnet, dass** jedes Modul in einem Stück zwei Paare der einen axialen Abschnitte (9) von Ventilgehäusen (4) und zwei entsprechende Paaren röhrenförmiger Einlass-Verbinder (11) enthält.

## Revendications

1. Ensemble de vanne (1) prévu pour être utilisé dans une installation pour doser des produits liquides tels que des substances chimiques et auxiliaires afin de traiter et de colorer les tissus et similaires qui doivent être alimentés individuellement à partir d'unités de stockage jusqu'à une conduite pour la distribution dosée desdits produits liquides à l'équipement, pour leur utilisation, ledit ensemble de vanne comprenant un collecteur tubulaire (2) équipé d'une pluralité d'entrées (11) destinées à être raccordées auxdites unités de stockage et d'une pluralité de vannes d'arrêt (3) commandées automatiquement pour ouvrir et fermer de manière alternée la communication entre chaque entrée (11) et le collecteur (2), les vannes d'arrêt (3) du collecteur (2) comprenant une pluralité de paires opposées agencées selon une configuration en V, dont les corps respectifs comprennent chacun deux parties axiales (4, 9), dont une partie (9) est intégrée d'un seul tenant avec le collecteur (2), ledit ensemble de vanne étant **caractérisé en ce que** :
le collecteur (2) est formé par une série de modules contigus assemblés de manière axiale ensemble, dont chacun comprend d'un seul tenant, une section axiale (10) du collecteur (2), lesdites parties axiales (9) des corps de vanne (4) d'au moins une paire de vannes (3), et les entrées (11) correspondantes,
lesdites entrées se composent de connecteurs tubulaires (11) agencés selon une configuration de V inversé,
lesdites parties axiales (9) des corps de vanne (4) forment des sièges de vanne (12) respectifs faisant immédiatement face à la section axiale (10) correspondante du collecteur (2).

2. Ensemble de vanne selon la revendication 1, **caractérisé en ce que** chaque module comprend deux paires d'un seul tenant desdites parties axiales (9) des corps de vanne (4) et deux paires correspondantes de connecteurs d'entrée tubulaires (11).
